# EUROPÄISCHE PATENTSCHRIFT

(11) **EP 0 608 483 B1**
(45) Veröffentlichungstag und Bekanntmachung des Hinweises auf die Patenterteilung: **25.11.1998**
(21) Anmeldenummer: 93115747.3
(22) Anmeldetag: 29.09.1993
(51) Int. Cl.: G01N 27/12, G08B 17/117

(54) **Verfahren und Halbleiter-Gassensor-Einrichtung zur Ermittlung von Brand- oder Explosionsgefahren bzw. Bränden**
Method and semiconductor gas sensor device for detecting fire or explosion hazards
Procédé et dispositif capteur de gaz à semi-conducteur pour la détection de risques d'incendie ou d'explosion

(30) Priorität: 28.01.1993 DE 4302367
(43) Veröffentlichungstag der Anmeldung: 03.08.1994
(73) Patentinhaber: SIEMENS AKTIENGESELLSCHAFT, 80333 München (DE); RWE Energie Aktiengesellschaft, 45128 Essen (DE)
(72) Erfinder: Hellmann,Josef,Dipl.-Ing., D-45739 Oer-Erkenschwick (DE); Petig,Heinz,Dipl.-Ing., D-45277 Essen (DE); Kohl,Claus-Dieter,Prof.Dr., D-35396 Giessen (DE); Kelleter,Jörg,Dipl.-Phys., D-35394 Giessen (DE); Kiesewetter,Olaf,Dr.Ing., D-98716 Geschwenda (DE)
(74) Vertreter: Epping, Wilhelm, Dr.-Ing.

(56) Entgegenhaltungen:
- EP-A- 0 141 090
- EP-A- 0 444 753
- US-A- 4 542 640

## Beschreibung

Die Erfindung betrifft ein Verfahren und eine Einrichtung zur Ermittlung einer Brand- oder Explosionsgefahr bzw. von offenen oder verdeckten Bränden in einem Gebäude o.ä., zum Beispiel in einer industriellen Anlage und dort insbesondere bei Staubbelastung, wobei die Gasentwicklung von zustandsabhängig Gase entwickelnden Stoffen durch mindestens zwei durch ihr prinzipielles Widerstandsverhalten unterschiedlich auf Gase reagierende Halbleiter-Gassensoren, vorzugsweise SnO₂-Sensoren, ermittelt und in bezug auf den Gefahrenzustand ausgewertet wird.

Die Ermittlung von mit Gasentwicklung verbundenen, kritischen Zuständen, wie die Entstehung von offenen oder verdeckten Bränden, hot spots o.ä., aber insbesondere von explosionsfähigen Gasgemischen, die für sich oder in Kombination mit einer erhöhten Temperatur zu Explosionen oder Verpuffungen führen können, ist von erheblicher Bedeutung. Insbesondere bei Explosionen oder Verpuffungen, aber auch bei Bränden kommt es immer wieder zu Personenschäden, zumindest aber zu erheblichen Sachschäden.

Aus US-A-4542640 ist ein System bekannt, um eine Vielzahl unterschiedlicher Gase wie Kohlenmonoxid, Kohlenwasserstoffe, Ammoniak, Wasserstoff, Aceton, Schwefelwasserstoff, Alkohol- und Lösungsmitteldämpfe zu detektieren. Dazu wird das Ansprechverhalten einer Vielzahl unterschiedlich arbeitender Gassensoren auf Konzentrationsänderungen der zu detektierenden Gase bestimmt, wobei zunächst das Ansprechverhalten der einzelnen Gassensoren auf jeweils nur ein zu detektierendes Gas bestimmt wird und aus den ermittelten Daten mittels eines Rechenverfahrens aus dem Ansprechverhalten des Systems von Gassensoren die einzelnen Gase identifizierbar sind. Das unterschiedliche Ansprechverhalten der einzelnen Gassensoren wird dabei auf bekannte Weise durch unterschiedliche physikalische Effekte, unterschiedlichen Aufbau und unterschiedliche Betriebsbedingungen wie zum Beispiel unterschiedliche Temperaturen erzielt.

Aus EP-A-0444753 ist ein Gassensor auf der Basis von mit Platin dotiertem Zinnoxid bekannt, der zur Detektion von Kohlenwasserstoffen wie zum Beispiel Methan geeignet ist. Zur Unterscheidung unterschiedlicher Gase werden dabei zwei gleich aufgebaute Gassensoren in einem System integriert und die Gassensoren bei jeweils unterschiedlichen Temperaturen betrieben und die Änderung des Volumenwiderstandes ausgewertet.

Aus dem deutschen Gebrauchsmuster 91 13 607 ist eine Einrichtung bekannt, die insbesondere durch den Schutz der verwendeten Sensoren durch einen Ex-Schutz-Hut aus kleinporigem Sintermaterial, das zwar den Zutritt von Gasen zu den Sensoren erlaubt, den Zutritt von Stäuben jedoch weitgehend verhindert, für die Detektion gefährlicher Zustände in staubbelasteten Umgebungen geeignet ist. Die geringen Mengen Staub, die im Lauf der Zeit die Oberfläche der Sensoren erreichen, werden auf diesen verascht und beeinträchtigen die Funktion der Sensoren nicht.

Die in den bekannten Einrichtungen verwendeten, beispielsweise im Volumenwiderstand durch oxidierende Gase beeinflußten Sensoren weisen den Nachteil auf, daß die bei offenen Bränden, Glutnestern etc. entstehenden Gase, z. B. Stickoxide, relativ häufig nicht eindeutig detektiert werden. Eine eindeutige Detektierung kann überraschenderweise durch die Verwendung eines Sensors mit Ausnutzung des Kontaktwiderstandes am Übergang einer Elektroden- zu einer Sensorschicht erreicht werden. Entsprechende Sensoren sind aus der Dissertation von U. Weimar, "Oxidgassensoren und Multikomponentenanalyse", Eberhard-Karls-Universität Tübingen, 1992, bekannt. Aus dieser Dissertation gehen auch die physikalischen Grundlagen derartiger Sensoren hervor.

Es ist Aufgabe der Erfindung, ein Verfahren und eine Einrichtung anzugeben, mit der auch in staubbelasteten Räumen sowohl eine allgemeine Gefahrenlage als auch eine Schwelbrandbildung, eine Glutbildung oder schon entwickelte offene Brände detektiert werden können.

Die Aufgabe wird im wesentlichen durch die in Anspruch 1 bzw. 10 angegebenen Maßnahmen und Merkmale gelöst.

Zur Detektierung von oxidierbaren Gasen eines Schwelbrandes o.ä. werden also Sensoren verwendet, die im wesentlichen die Änderungen des ohmschen Widerstandes durch Eindiffusion der oxidierbaren Gase in die Sensorschicht ausnutzen, und zur Detektierung von Stickoxiden, mit denen offene Brände erkannt werden können, werden erfindungsgemäß Sensoren, die im wesentlichen Kontaktwiderstandsänderungen durch die eindiffundierten Stickoxide ausnutzen, verwendet. In beiden Fällen hat sich überraschend SnO₂ als besonders günstig herausgestellt. Für die Detektierung oxidierbarer Gase wird es vorteilhaft mit Palladium dotiert und evtl. mit einer oxidationsbeeinflussenden Siliziumdeckschicht versehen. Für die Detektierung von NOₓ-Gasen werden vorteilhaft die in den Patentansprüchen angegebenen Halbleiter-Widerstandssensoren aus einem reinen Zinnoxid verwendet.

Wie sich bei Versuchen gezeigt hat, liegt ein gefährlicher Zustand in der Regel nicht schon bei hoher Konzentration eines der detektierbaren Gase vor. Vielmehr bedarf es zum Vorliegen eines gefährlichen Zustandes eines kritischen Konzentrationsverhältnisses oder -musters über eine gewisse Zeit, wobei insbesondere die Tendenz der Konzentrationsverhältnisse in Richtung auf einen gefährlichen Zustand besonders aussagekräftig ist. Ein Beispiel eines derartigen Zustands-Musters, das sich aus den Einzelkonzentrationen, den Verhältnissen der Einzelkonzentrationen, ihrer Tendenz und ihrer zeitlichen Aufeinanderfolge ergibt, ist in Anspruch 12 angegeben. Mit einem derartigen Muster läßt sich in sicherer Weise der Übergang in einen kritischen Zustand oder sogar in den offen brennenden Zustand detektieren.

Das Vorliegen eines kritischen Konzentrationsverhältnisses oder -musters über eine gewisse Zeit, die relativ lang sein kann, wie in dem "Fire Safety Journal", Vol.18, No.1, 1992, über das "King's Cross Underground Fire" beschrieben, ist ein sicherer Hinweis für das Vorliegen einer Brand-, Verpuffungs- oder Explosionsgefahr. Dies gilt auch für durch organische Partikel staubbelastete Umgebungen, z.B. in Mühlen, da die oxidierbaren Gase Flammenbrücken o.ä. zwischen den oxidierbaren Partikeln bilden, deren kritische Konzentration also bei dem Auftreten oxidierbarer Gase niedriger liegt als bei dem Nichtvorhandensein von oxidierbaren Gasen.

Die Einrichtung zur Durchführung des verfahrens zeichnet sich durch die Verwendung von Halbleiter-Widerstandssensoren mit prinzipiell unterschiedlichen Widerstandseigenschaften, nämlich insbesondere Änderung des Volumenwiderstandes oder Änderung des Kontaktwiderstandes, aus. Die Sensoren mit Volumen-Widerstandsänderung sind insbesondere mit Katalysatormaterial, etwa Palladium, o. ä. dotiert. Sie weisen auch vorteilhaft zur Erzielung einer hohen Langzeitstabilität, also insbesondere bei Betrieb bei relativ hohen Temperaturen, eine Siliziumoxid-Diffusionsbeeinflussungsschicht auf, die insbesondere durch Abscheidung aus der Gasphase erzeugt wird und nur wenige Atomlagen dick ist. Diese Siliziumoxid-Diffusionsbeeinflussungsschicht besteht aus SiOₓ mit x in der Nähe von 1,4. Im Gegensatz dazu werden die mit Kontaktwiderstandsänderungen arbeitenden Sensoren vorzugsweise aus reinem Metalloxid, insbesondere aus SnO₂, hergestellt.

Die mit Kontaktwiderstandsänderungen arbeitenden Sensoren besitzen vorzugsweise die Form ineinander geschobener, sehr feinzinkiger Kämme mit sehr kleinen Kammzinkenabständen. Die Abstände liegen zwischen 10 µm und 100 µm und die Breite der Kammzinken zwischen 20 µm und 200 µm bei einer Schichtdicke des Kammaterials von etwa 1 µm. Als Kammaterial wird vorzugsweise auf einem Substrat abgeschiedenes oder auf ein Substrat aufgedampftes Platin verwendet und die Zinken werden durch einen Schneidlaser geschnitten.

Die gemessenen widerstandswerte, die ein Maß für die Gaskonzentrationen sind, ihre verhältnisse und die Tendenz ihrer verhältnisse werden in einer elektronischen Recheneinheit ausgewertet, die sowohl als zentrale als auch als dezentrale Recheneinheit, dann jeweils einer Einrichtung zugeordnet, ausgebildet werden kann. Dieser Recheneinheit wird vorteilhaft auch die Regelung für die Heizung der Sensoren z. B. eine Platinschicht in Mäanderform, deren Widerstand als Maß für die erreichte Temperatur dient, übertragen. Sie ist auch zur Steuerung einer periodischen Detektion in Zyklen (Pulsbetrieb) geeignet, mit der der Stromverbrauch erheblich gesenkt und überraschenderweise die Detektionissicherheit verbessert werden kann.

Die Erfindung wird anhand von Zeichnungen näher erläutert, aus denen, ebenso wie aus den Unteransprüchen und der Beschreibung, auch in Kombination, weitere erfinderische Einzelheiten entnehmbar sind. Im einzelnen zeigen:
- FIG 1: das Blockschaltbild einer erfindungsgemäßen Sensorgruppe mit je einem für CO, NOₓ und H₂ sensitiven Sensor und
- FIG 2: das Schema des Auswerteprogramms für eine Sensorgruppe nach FIG 1,
- FIG 3: eine Kammzinken-Elektrodenanordnung,
- FIG 4: einen Einzelsensor in Ausgestaltung für die NOₓ-Erkennung,
- FIG 5: einen Heizmäander,
- FIG 6: die Werteverläufe verschiedener Brandmelder bei einem Schwelbrand von Holz, z.B. Buche,
- FIG 7: die Werteverläufe verschiedener Brandmelder bei einem Brandversuch von Kunststoff (PU) mit offener Flamme und
- FIG 8: die Ausgasungen von Kohle bei Erhitzung.

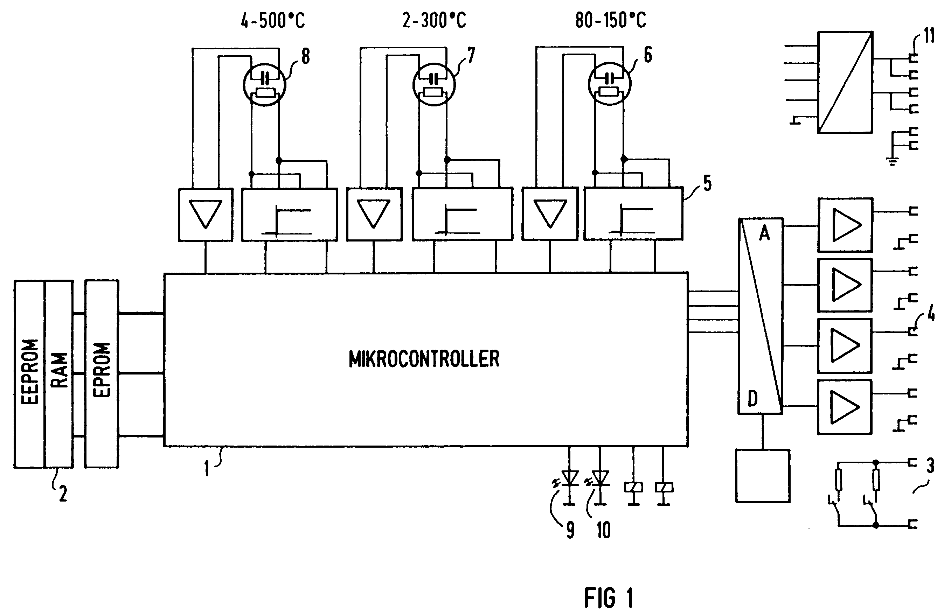

In FIG 1, die ein Blockschaltbild einer Halbleitergassensoreinheit zur Detektion gefährlicher Zustände und offener Brände zeigt, bezeichnet 1 den Mikrocontroller. 2 bezeichnet die Speicherelemente, 3 die digitalen Ausgänge und 4 die analogen Ausgänge in das System. 11 bezeichnet Anschlußeingänge und 9 sowie 10 bezeichnen Leuchtdioden entsprechend GM 91 13 607, z.B. zur Signalisierung des Betriebszustandes der Einheit. An den Mikrocontroller 1 sind Heizungsregler 5 angeschlossen, die, insbesondere über eine Pulsbreitenmodulation, die Temperaturen der Sensoren 6, 7 und 8 regeln.

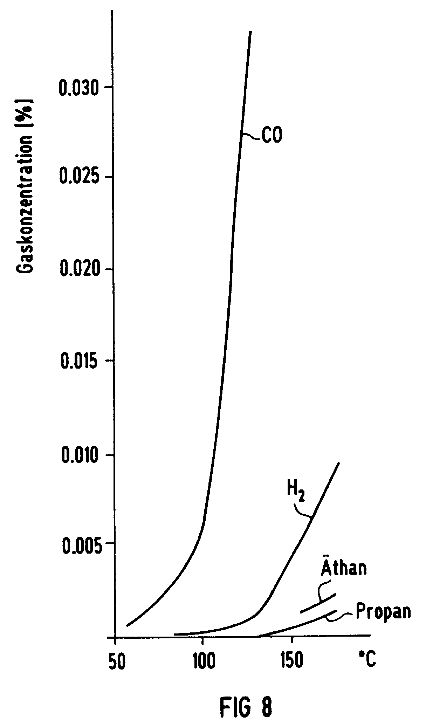

In dem gezeigten Beispiel ist der Sensor 6 auf ca. 100° C geregelt, diese Temperatur wird bei SnO₂-Sensoren für die Erkennung des CO-Gehaltes benutzt. Bei dieser Temperatur besteht zwar eine gewisse Querempfindlichkeit zu H₂O, diese kann jedoch durch einen Rechenvorgang in Verbindung mit der Anzeige des Sensors 8 unterdrückt werden. Der Sensor 7 ist auf ca. 250° C geregelt, diese Temperatur wird bei dem Sensor für die Erkennung von Stickoxiden, die insbesondere bei offenen Bränden auftreten, als besonders vorteilhaft benutzt. Unterhalb von ca. 250° C nimmt zwar die Empfindlichkeit zu, die Reaktionsgeschwindigkeit wird jedoch für den vorgesehenen Fall zu klein. Das umgekehrte Verhältnis liegt oberhalb von 250° C vor, so daß sich ca. 250° C als Optimum für den industriellen Einsatz herausgestellt hat. Der Sensor 8 wird auf ca. 450°C geregelt, bei dieser Temperatur ergibt sich bei SnO₂-Sensoren eine sehr gute H₂-Erkennung. Die H₂-Erkennung ist besonders wichtig, da es sich gezeigt hat, daß insbesondere bei Kohle, wie FIG 8 zeigt, aber auch bei anderen brennbaren Stoffen, kritische Zustände mit einem Anstieg des CO/H₂-Verhältnisses beginnen. Die Ausgasungen beginnen bereits bei relativ niedrigen Temperaturen. Die H₂-Erkennung wird zwar durch einen H₂O-Einfluß überlagert, da sich der H₂O-Einfluß aber zwischen niedrigen und hohen Temperaturen bei passend (SᵢOₓ, mit x etwa 1,4) vorbehandelten Sesoren nur geringfügig ändert, kann der H₂O-Anteil aus dem H₂-Wert herausgerechnet werden.

Die Temperaturen von ca. 100° C, 250° C und 450° C wurden insbesondere für die Aufgaben der Erkennung gefährlicher Zustände und offener Brände ausgewählt. Sie sind vom Sensormaterial, z.B. SnO₂, und seiner Präparation abhängig. Es versteht sich, daß für andere Aufgabenstellungen auch andere, als in der Beschreibung und den Ansprüchen geschilderte, Mustererkennungsprozeduren ebenso wie andere Temperaturen und gegebenenfalls auch andere Sensormaterialien in zum Teil auch erfinderischer Auswahl gebraucht werden.

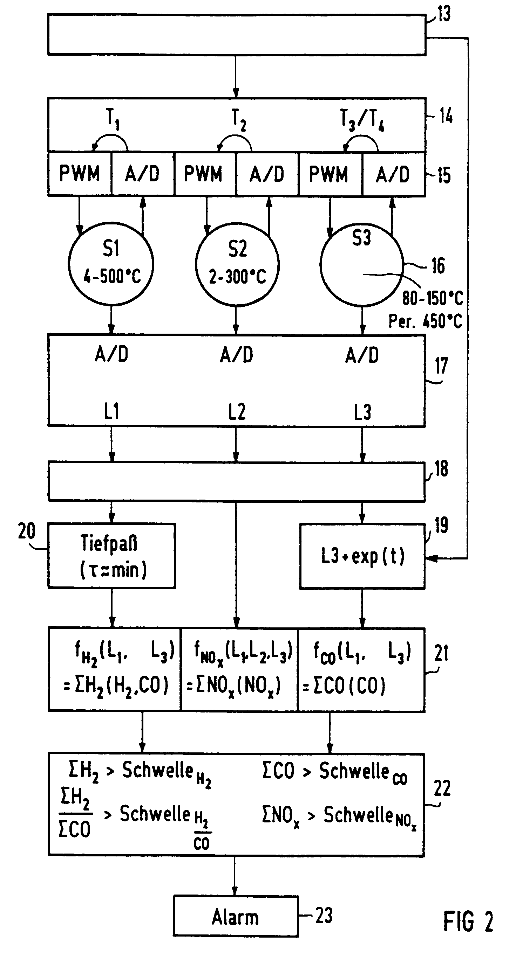

FIG 2 zeigt das Programmschema des Mikrocontrollers, wobei die einzelnen Programmteile als Blöcke dargestellt sind. Die Pfeile geben die jeweiligen Wirkrichtungen an. In FIG 2 bezeichnet 13 den Timerblock, der die zyklischen Vorgänge steuert. So soll z. B. periodisch, etwa alle 6 Stunden, eine Freiheizung des Sensors 3, in FIG 2 mit 16 bezeichnet, mit 450° C erfolgen. Die Temperaturregelung der Sensoren erfolgt im Reglerblock 14, wobei eine Pulsweitenmodulation (PWM) zur Heizleistungssteuerung benutzt wird. Die Pulsweitenmodulationsblöcke sind neben den Analog-Digital-Wandlern 15 gezeichnet. Die einzelnen Sensoren 16 sind mit S1, S2 und S3 bezeichnet. In den Feldern von S1, S2 und S3 ist die vorzugsweise eingestellte Temperatur angegeben.

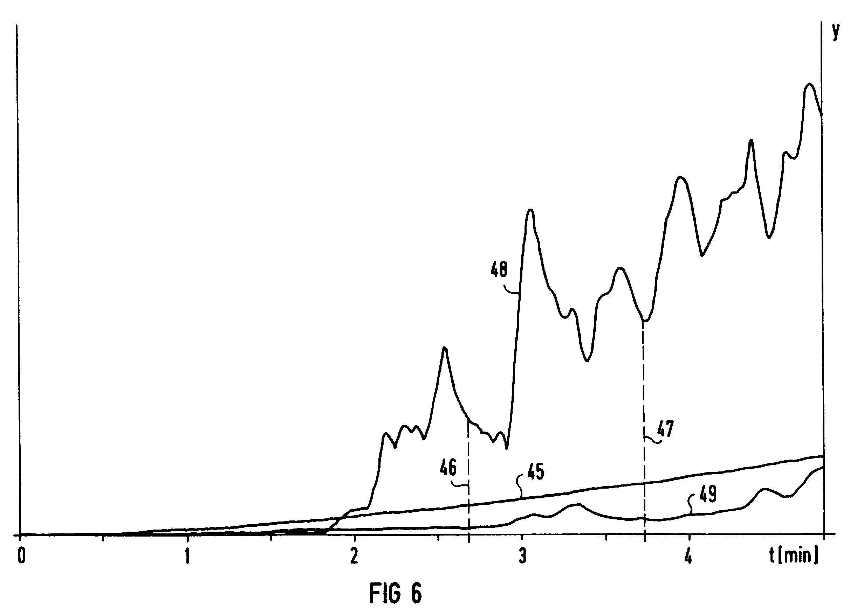

Die Sensoren haben vorzugsweise eine Platinheizbahn in Mäanderform, wie sie in FIG 5 dargestellt ist. Der Widerstand der Heizbahn dient gleichzeitig der Temperaturmessung. Hierzu erfolgt vorteilhaft durch ein Laserschnittverfahren eine Kalibrierung.

Im Block 17 erfolgt eine Analog-Digital-Wandlung zur Messung der Leitwerte als Maß der Widerstände der Sensorschichten. Die Leitwerte sind mit L1, L2 und L3 angegeben. In Block 18 werden die Leitwerte normiert, um Herstellungsstreuungen zu kompensieren. Die Normierung erfolgt z. B. auf Werte zwischen Null und Eins. In den Blöcken 19 und 20 wird das nicht einheitliche Anzeige- und Aufheizverhalten der einzelnen Sensoren ausgeglichen. Der Sensor, der mit ca. 450° C betrieben wird, ist in der Regel schneller im Anzeigeverhalten, als ein Sensor mit geringerer Temperatur. Die Wirkung eines Tiefpasses (Block 20) gleicht die Zeitverhalten aneinander an. Dabei wird gleichzeitig berücksichtigt, daß der Sensor S3 (ca. 100° C) sich langsam einem Sättigungswert annähert. Zur Desorption unerwünschter Adsorbate wird er von Zeit zu Zeit, insbesondere periodisch, aufgeheizt. Zur Zeitverhaltensberechnung wird zum Leitwert L3 eine Exponentialfunktion addiert. t ist die Zeit seit dem letzten Aufheizen. In Block 21 wird die NOₓ-,CO- und H₂- Konzentration sowie deren zeitlicher Verlauf und ihre Tendenzen berechnet.

In Block 22 werden die Alarmkriterien (z. B. Schwellwerte) verarbeitet. In dem gezeigten Beispiel werden sowohl Schwellwertüberschreitungen von H₂ und CO als auch von NOₓ berücksichtigt. Der Alarm 23 wird ausgelöst, wenn z. B. eine vorher bestimmte Kombination aus Einzelwertverhältnissen, der Tendenz der Verhältnisse oder die zeitliche Abfolge von Tendenzwerten oder Verhältniswerten einem vorher bestimmten Muster entspricht.

In dem Mustervergleichsspeicher sind auch die Muster von Sonderereignissen niedergelegt, um Fehlalarme bei Sonderereignissen, z. B. Schweißarbeiten, Vulkanisiervorgängen etc. zu vermeiden. Derartige Sonderereignismuster unterscheiden sich in typischer Weise von denen eines kritischen Zustandes, z. B. eines Schwelbrandes oder aus Temperaturerhöhung mit der Folge von Gaszuständen, die zu einer Explosionsgefahr führen.

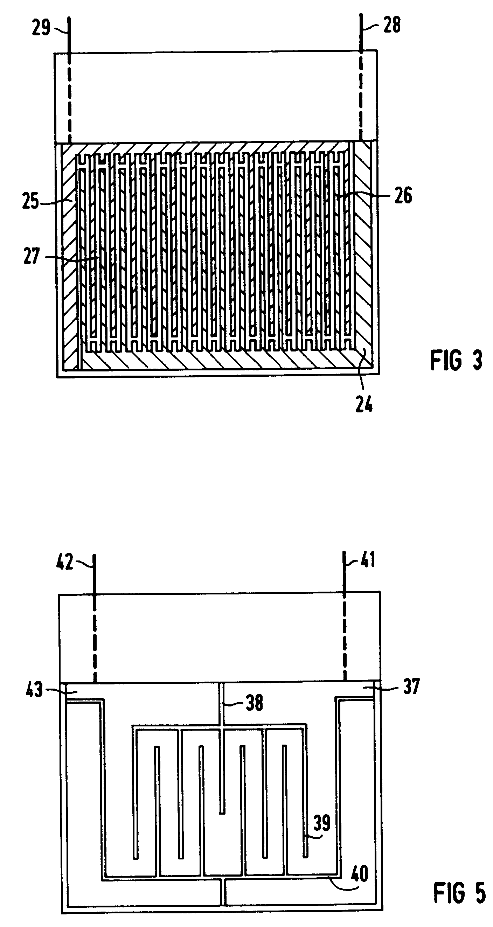

In FIG 3 bezeichnet 24 eine Kammelektrode und 25 die komplementäre Kammelektrode eines mit Änderungen des Kontaktwiderstandes arbeitenden Halbleiter-Gassensors. Die einzelnen Kammzinken 26, die durch Schneiden einer auf einem Substrat, z.B. Al₂O₃, abgeschiedenen Platinschicht erzeugt werden, weisen zwischen sich Schneidrillen auf, die durch einen Laser-Trennschnitt erzeugt werden. Die Schneidrillen 27 reichen einige µm unter die Unterseite der Elektroden in das Substrat hinein, um eine sichere elektrische Trennung der einzelnen Kammzinken voneinander zu erreichen. Die Elektroden 24 und 25 sind über elektrische Anschlüsse 28 und 29 mit einer Gleichspannungsquelle und einer Widerstandsmeßeinheit verbunden. Diese bilden Teile der in FIG 1 dargestellten Schaltung.

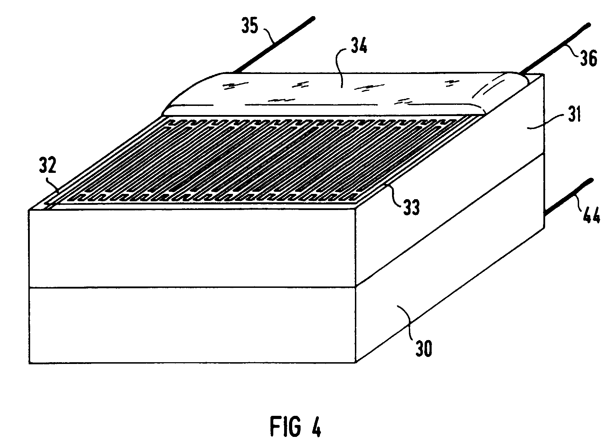

In FIG 4 bezeichnet 30 ein Heizsubstrat, z.B. ein Al₂O₃-Plättchen, auf dem das Meßsubstrat 31 (z.B. ebenfalls ein Al₂O₃-Plättchen), angeordnet ist. Heiz- und Meßsubstrat können jedoch auch einstückig ausgebildet sein. Das Heizsubstrat befindet sich dann auf der Unterseite. Auf der Oberseite des Meßsubstrats 31 befindet sich die in FIG 3 näher gezeigte Anordnung mit den mit 32 und 33 bezeichneten Elektroden. Die elektrischen Anschlüsse für die Elektroden sind mit 35 und 36 und der sichtbare Anschluß der Heizung ist mit 44 bezeichnet. Die Verbindung der Anschlüsse 35 und 36 zu den Elektroden ist mit einer Glasschicht 34 abgedeckt, die die Kontakte fixiert und schützt. Die Abmessungen eines typischen Sensors betragen etwa 3,5 mal 3,5 mm, dabei beträgt die Abmessung des Elektrodenfeldes etwa 3,5 mal 2 mm. Der Sensor insgesamt ist etwa 1,5 mm dick. Wegen der kleinen Abmessungen, ca. 3,5 mm x 3,5 mm, ist es ohne weiteres möglich, mehrere dieser Sensoren, z. B. in bevorzugter Ausführung 3 oder 4, auf einem Grundstrubstrat, z.B. aus AL₂ O₃, unterzubringen.

In FIG 5, die den Heizmäander zeigt, bezeichnen 37 und 43 die beiden Hälften des Heizmäanders mit den elektrischen Anschlüssen 41 und 42. Lasertrennschnitte 38, 39 und 40, deren Dicke zur Kalibierung des Heizwiderstandes variiert werden kann, trennen die einzelnen Arme des Mäanders derart voneinander, daß ein durchgehender Strompfad entsteht.

In FIG 6 bezeichnet 45 das Abbrandgewicht des schwelenden Materials, z.B. Buche. 48 bezeichnet den von einem optischen Melder stammenden Signalverlauf mit dem Auslösezeitpunkt 47. 49 bezeichnet den Signalverlauf eines Ionisationsmelders, der den Schwelbrand nicht detektieren konnte. Anders dagegen der erfindungsgemäße Halbleiter-Gassensor, der bereits im Auslösezeitpunkt 46 ein Detektionssignal abgibt.

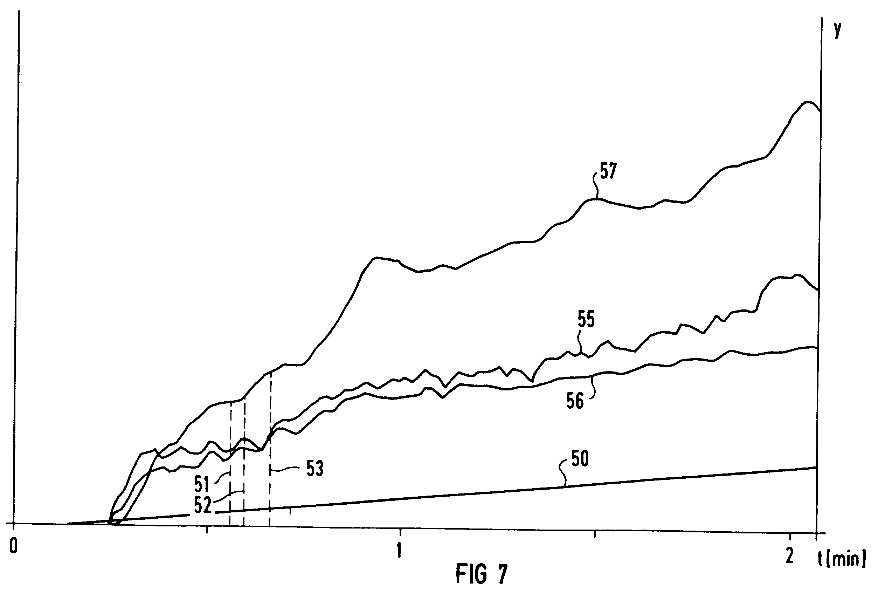

In FIG 7 bezeichnet 50 das Abbrandgewicht des brennenden Kunststoffs und 57 den Signalverlauf des Ionisationsmelders mit dem Auslösezeitpunkt 53. 56 bezeichnet den Signalverlauf des optischen Melders mit dem Auslösezeitpunkt 52. Der Signalverlauf des erfindungsgemäßen Halbleiter-Gassensors ist mit 55 bezeichnet, sein Auslösezeitpunkt mit 51. Wie sich aus den FIG 6 und 7 ergibt, erfolgt die Detektion durch den erfindungsgemäßen Halbleiter-Gassensor bei der gewählten Versuchsanordnung (Testausführung durch den Verband der Sachversicherer) bei offenen Flammen nur etwas früher als bei den Vergleichsmeldern, bei einem Schwelbrand ist der erfindungsgemäße Halbleiter-Gassensor aber deutlich schneller. Zur Brand- oder Explosionsvermeidung ist der erfindungsgemäße Sensor also unverzichtbar.

FIG 8 zeigt schließlich den Zusammenhang der CO- und H₂-Ausgasung von Kohle, entnommen aus "Fire and Materials", Vol.9, No.1, 1985. Ähnliche Verhältnisse liegen auch bei anderen organischen Stoffen vor, der bisher bei der Erkennung gefährlicher Zustände vernachlässigte H₂-Einfluß ist also erheblich.

Das erfindungsgemäße Verfahren und die erfindungsgemäße Einrichtung sind ursprünglich für die Überwachung von Bekohlungsanlagen, Kohlelagern etc. entwickelt worden. versuche haben jedoch bewiesen, daß sie auch in allen anderen, insbesondere staubbelasteten, Umgebungen, also auch in Mühlen, Sägewerken u. ä., also generell in Anlagen in denen organische Stoffe verarbeitet werden oder eingesetzt sind, wie Gummi oder Kunststoff, mit Erfolg verwendet werden können. Im Gegensatz zu den bisher allein verwendeten Ionisationsmeldern und optischen Meldern detektieren sie sehr vorteilhaft Gefahrenzustände bereits vor Ausbruch eines offenen Brandes und können insbesondere zur Explosionsverhütung eingesetzt werden.

Zur Sicherheit werden die erfindungsgemäßen Sensoren auch vorteilhaft mit den bekannten Meldern kombiniert, da so auf jeden Fall eine verbesserung des Gefahrenzustands-Meldeverhaltens von Brandmeldeanlagen erreicht wird und keinesfalls eine verschlechterung durch die Einführung der neuen Detektions-Technik erfolgen kann. So wird sowohl Versicherungsbelangen Rechnung getragen als auch dem Verlangen der Anlagenbetreiber nach höchstmöglichem Schutz von Personen und Sachwerten.

## Patentansprüche

1. Verfahren zur Ermittlung von Brand- oder Explosionsgefahren bzw. von offenen oder verdeckten Bränden in einem Gebäude o. ä., z. B. in industriellen Anlagen und dort insbesondere bei Staubbelastung, wobei die Gasentwicklung von zustandsabhängig Gase entwickelnden Stoffen durch mindestens zwei durch ihr prinzipielles Widerstandsverhalten unterschiedlich auf Gase reagierende Halbleiter-Gassensoren, vorzugsweise SnO₂- Sensoren, in bezug auf einen Gefahrenzustand ermittelt und ausgewertet wird,
**dadurch gekennzeichnet,**
daß eine Kombination aus Sensoren zur Detektierung von oxidierbaren Gasen, die im wesentlichen die Änderung des ohmschen Widerstandes ausnutzen, und aus Sensoren zur Detektierung von Stickoxiden, die im wesentlichen Kontaktwiderstandsänderungen ausnutzen, verwendet wird
und daß ein Alarmsignal ausgelöst wird, wenn kritische Sensorwerte erreicht oder kritische Muster im Vergleich zwischen Sensorwerten unterschiedlicher Sensoren detektiert werden.

2. Verfahren nach Anspruch 1,
**dadurch gekennzeichnet,**
daß das Widerstandsverhalten der Halbleiter-Widerstandssensoren durch eine Diffusionsbeeinflussungsdeckschicht aus Siliziumoxid (SiOₓ), z.B. aus HMDS (Hexamethyldisiloxan) abgeschiedenem Silizium, eingestellt wird.

3. Verfahren nach Anspruch 1 oder 2,
**dadurch gekennzeichnet,**
daß das Widerstandsverhalten der Halbleiter-Widerstandssensoren durch eine Korngrößenauswahl und eine Temperung eingestellt wird, wobei die Korngröße, insbesondere für Stickoxidmessungen, bei SnO₂-Sensoren unter 10 µm, insbesondere unter 5 µm, liegt.

4. Verfahren nach Anspruch 3,
**dadurch gekennzeichnet,**
daß bei der Herstellung eines vorzugsweise stickoxidempfindlichen Sensors eine Aufschlämmung von reinen Zinn (IV) Oxiden in Bi-destilliertem Wasser im Verhältnis von ca. 1 : 10 verwendet wird.

5. Verfahren nach Anspruch 4,
**dadurch gekennzeichnet,**
daß die aufgetragene Zinnoxidaufschlämmung nach einem Trocknungsvorgang im Temperaturbereich zwischen 300°C und 500°C, insbesondere bei ca. 400°C, getempert wird.

6. Verfahren nach Anspruch 4 oder 5,
**dadurch gekennzeichnet,**
daß der stickoxidempfindliche Sensor bei einer Arbeitstemperatur zwischen 200°C und 300°C, vorzugsweise bei 250°C, betrieben wird.

7. Verfahren nach einem der Ansprüche 1 bis 6,
**dadurch gekennzeichnet,**
daß die Sensoren, zumindest aber der stickoxidempfindliche Sensor, mit Meßspannungs-Impulsen betrieben werden, vorzugsweise mit rechteck- oder trapezförmigen Impulsen, mit denen insbesondere die Zeitkonstanten von gasinduzierten Grenzflächenzuständen ausgewertet werden.

8. Verfahren nach einem der Ansprüche 1 bis 7,
**dadurch gekennzeichnet,** daß
ein Alarmsignal ausgelöst wird, wenn ein vorherbestimmtes Verhältnis zwischen Sensorwerten eine vorherbestimmte Zeit eine vorherbestimmte Tendenz aufweist.

9. Verfahren nach Anspruch 8,
**dadurch gekennzeichnet,**
daß kritische Werte bzw. ein kritisches Muster, insbesondere bei einem Verhältnis zwischen den detektierten Gasen, z.B. CO und H₂, das größer als ca. 2,5 ist und wobei die Tendenz des Verhältnisses mindestens ca. 10 Minuten negativ ist und die negative Tendenz nach dem Überschreiten eines Grenzverhältnisses, vorzugsweise von ca. 2,5 auftritt, angenommen werden.

10. Einrichtung zur Durchführung eines Verfahrens zur Ermittlung einer Brand- oder Explosionsgefahr bzw. von verdeckten Bränden oder Brandnestern in Gebäuden o.ä., z.B. in industriellen Anlagen, mit Halbleiter-Widerstandssensoren (6,7,8,16), mit den Halbleiter-Widerstandssensoren zugeordneten Widerstandsheizungen (37,43), mit denen vorgegebene Sensorschichttemperaturen einstellbar sind und mit einer elektronischen Recheneinheit (1) für die, vorzugsweise kompensierende, Auswertung der gemessenen Widerstandswerte als Maß der Gaskonzentrationen,
**dadurch gekennzeichnet,**
daß zumindest ein erster Sensor eine auf Volumenwiderstandsbasis reagierende Sensorschicht auf der Basis von SnO₂ aufweist und
daß zumindest ein zweiter Sensor eine auf Kontakt-Widerstandsbasis reagierende Sensorschicht auf der Basis von SnO₂ aufweist
und daß die elektronische Recheneinheit so ausgebildet ist, daß die Verhältnisse und die Tendenz der Verhältnisse der Gaskonzentrationen ausgewertet wird.

11. Einrichtung nach Anspruch 10,
**dadurch gekennzeichnet,**
daß der auf Volumen-Widerstandsbasis reagierende SnO₂-Sensor eine Silizium-Diffusionsbeeinflußungs-Schicht aufweist, die vorzugsweise durch eine Exposition des Sensors in einem mit HMDS-Gas gefüllten Behälter erzeugt wurde.

12. Einrichtung nach Anspruch 10 oder 11,
**dadurch gekennzeichnet**,
daß die auf Kontakt-Widerstandsbasis reagierende SnO₂-Sensorschicht eine aus einer reinen SnO₂-Aufschlämmung mit anschließender Temperung erzeugte Sensorschicht ist.

13. Einrichtung nach Anspruch 12,
**dadurch gekennzeichnet**,
daß in bzw. unterhalb der getemperten SnO₂-Schicht elektrische Leiter (24,25) aus Metall, vorzugsweise aus Platin in Kammform und mit einem Abstand der Kammzinken (26) zwischen 10 µm und 100 µm, insbesondere von ca. 50 µm, und einer Breite der Kammzinken (26) zwischen 20 µm und 200 µm, insbesondere von ca. 60 µm bis 80 µm, angeordnet sind, an die eine elektrische Spannung, vorzugsweise unter 10 Volt, anlegbar ist.

14. Einrichtung nach einem der Ansprüche 10 bis 13,
**dadurch gekennzeichnet,**
daß die Sensoren eine mäanderförmige Heizschicht (37,43) aufweisen, deren Temperatur vorzugsweise durch eine Pulsbreitenmodulation des Heizstromes geregelt wird.

15. Einrichtung nach Anspruch 10 bis 14,
**dadurch gekennzeichnet,**
daß die elektronische Recheneinheit (1) dezentral auswertend ausgebildet ist.

16. Einrichtung nach einem der Ansprüche 10 bis 15,
**dadurch gekennzeichnet,**
daß die unterschiedlich ausgebildeten oder mit unterschiedlichen Temperaturen betriebenen Sensoren Teilflächen eines Multi-Funktions-Sensors bilden, z.B. im "One Chip Design".

17. Verfahren nach einem der Ansprüche 1 bis 9,
**dadurch gekennzeichnet,**
daß es zum vorbeugenden Brandschutz und/oder zur Erkennung von aufgetretenen, insbesondere verdeckten, Bränden oder Brandnestern, auch in staubbelasteter Umgebung, wie in Bekohlungsanlagen, Mühlen, Mahlanlagen etc., verwendet wird.

18. Verfahren nach einem der Ansprüche 1 bis 9 oder 17 ,
**dadurch gekennzeichnet**, daß es in Kombination mit Ionisation-Brandmeldern und/oder optischen Brandmeldern verwendet wird.

19. Einrichtung nach einem der Ansprüche 10 bis 16,
**dadurch gekennzeichnet**,
daß sie zum vorbeugenden Brandschutz und/oder zur Erkennung von aufgetretenen, insbesondere verdeckten, Bränden oder Brandnestern, auch in staubbelasteter Umgebung, wie in Bekohlungsanlagen, Mühlen, Mahlanlagen etc., verwendet wird.

20. Einrichtung nach einem der Ansprüche 10 bis 16 oder 19 ,
**dadurch gekennzeichnet**, daß sie in Kombination mit Ionisation-Brandmeldern und/oder optischen Brandmeldern verwendet wird.

## Claims

1. Method of detecting fire or explosion hazards or open or concealed fires in a building or the like, for example in industrial installations and, in particular, in the case of dust pollution in the latter, in which the gas evolution of substances evolving gases in a state-dependent manner is detected and evaluated in relation to a hazardous state by at least two semiconductor gas sensors, preferably SnO₂ sensors, which react differently to gases as a result of their basic resistance behaviour, characterized in that a combination is used which comprises sensors for detecting oxidizable gases, which sensors essentially utilize the change in the ohmic resistance, and sensors for detecting nitrogen oxides, which sensors essentially utilize contact-resistance changes, and in that an alarm signal is triggered if critical sensor values are reached or critical patterns are detected in the comparison between sensor values of different sensors.

2. Method according to Claim 1, characterized in that the resistance behaviour of the semiconductor resistance sensors is adjusted by means of a diffusion-modifying top layer composed of silicon oxide (SiOₓ), for example silicon deposited from HMDS (hexamethyldisiloxane).

3. Method according to Claim 1 or 2, characterized in that the resistance behaviour of the semiconductor resistance sensors is adjusted by means of grain size selection and annealing, the grain size being below 10 µm, in particular below 5 µm, in the case of SnO₂ sensors, in particular for nitrogen oxide measurements.

4. Method according to Claim 3, characterized in that, in the production of a sensor preferably sensitive to nitrogen oxide, a suspension of pure tin(IV) oxides in doubly distilled water is used in a ratio of approximately 1:10.

5. Method according to Claim 4, characterized in that the tin oxide suspension applied is annealed after a drying operation in the temperature range between 300°C and 500°C, in particular at approximately 400°C.

6. Method according to Claim 4 or 5, characterized in that the sensor sensitive to nitrogen oxide is operated at a working temperature between 200°C and 300°C, preferably at 250°C.

7. Method according to one of Claims 1 to 6, characterized in that the sensors, at least, however, the sensor sensitive to nitrogen oxide, are operated with measurement-voltage pulses, preferably with square or trapezoidal pulses with which, in particular, the time constants of gas-induced interfacial states are evaluated.

8. Method according to one of Claims 1 to 7, characterized in that an alarm signal is triggered if a specified ratio between sensor values has a specified trend for a specified time.

9. Method according to Claim 8, characterized in that critical values or a critical pattern are assumed, in particular in the case of a ratio between the detected gases, for example CO and H₂, which is greater than approximately 2.5, the trend of the ratio being negative for at least approximately 10 minutes and the negative trend occurring after a limit ratio, preferably of approximately 2.5, is exceeded.

10. Device for carrying out a method for detecting a fire or explosion hazard or concealed fires or seats of fire in buildings or the like, for example in industrial installations, having semiconductor resistance sensors (6, 7, 8, 16), having resistance heaters (37, 43) which are assigned to the semiconductor resistance sensors and with which specified sensor layer temperatures can be set, and having an electronic computer unit (1) for the evaluation, preferably compensating, of the measured resistance values as a measure of the gas concentrations, characterized
in that at least a first sensor has a sensor layer which responds on a bulk resistance basis and which is based on SnO₂ and
in that at least a second sensor has a sensor layer responding on a contact resistance basis and based on SnO₂
and in that the electronic computer unit is designed so that the ratios and the trend of the ratios of the gas concentrations are evaluated.

11. Device according to Claim 10, characterized in that the SnO₂ sensor responding on a bulk resistance basis has a silicon diffusion-modifying layer which was preferably produced by exposing the sensor in a container filled with HMDS gas.

12. Device according to Claim 10 or 11, characterized in that the SnO₂ sensor layer responding on a contact resistance basis is a sensor layer produced from a pure SnO₂ suspension with subsequent annealing.

13. Device according to Claim 12, characterized in that electrical conductors (24, 25) composed of metal, preferably of platinum in comb form with a spacing of the comb teeth (26) of between 10 µm and 100 µm, in particular of approximately 50 µm, and a width of the comb teeth (26) of between 20 µm and 200 µm, in particular of approximately 60 µm to 80 µm, to which an electrical voltage, preferably below 10 volts, can be applied are disposed in or underneath the annealed SnO₂ layer.

14. Device according to one of Claims 10 to 13, characterized in that the sensors have a meander-shaped heating layer (37, 43) whose temperature is preferably regulated by a pulse-width modulation of the heating current.

15. Device according to Claims 10 to 14, characterized in that the electronic computer unit (1) is designed to evaluate decentrally.

16. Device according to one of Claims 10 to 15, characterized in that the differently designed sensors or sensors operated at different temperatures form subsurfaces of a multifunction sensor, for example in "one-chip design".

17. Method according to one of Claims 1 to 9, characterized in that it is used for the purpose of preventative fire protection and/or for the purpose of detecting fires or seats of fire which have occurred, in particular concealed fires or seats of fire, also in a dust-polluted environment, such as in coaling plants, mills, grinding plants etc.

18. Method according to one of Claims 1 to 9 or 17, characterized in that it is used in combination with ionization fire detectors and/or optical fire detectors.

19. Device according to one of Claims 10 to 16, characterized in that it is used for the purpose of preventative fire protection and/or for the purpose of detecting fires or seats of fire which have occurred, in particular concealed fires or seats of fire, also in a dust-polluted environment, such as in coaling plants, mills, grinding plants etc.

20. Device according to one of Claims 10 to 16 or 19, characterized in that it is used in combination with ionization fire detectors and/or optical fire detectors.

## Revendications

1. Procédé pour détecter les risques d'incendie ou d'explosion resp. les incendies ou les feux couverts dans un bâtiment ou autre, par exemple dans des installations industrielles, notamment lorsqu'il s'agit d'endroits très chargés en poussières, l'émission de gaz par des matières qui dégagent des gaz en fonction de leur état étant détectée, par rapport à une situation de risque, par au moins deux capteurs de gaz à semi-conducteur, de préférence des capteurs au SnO₂, qui réagissent aux gaz de manière différente par le comportement de principe de leur résistance, et cette émission étant analysée,
caractérisé
en ce qu'on utilise une combinaison de capteurs servant à détecter des gaz oxydables qui permettent de tirer parti essentiellement de la modification de la résistance ohmique, et de capteurs servant à détecter les oxydes d'azote qui permettent de tirer parti essentiellement des modifications de la résistance de contact,
et en ce qu'un signal d'alarme est déclenché lorsque des valeurs critiques des capteurs sont atteintes ou lorsque des modèles critiques de comparaison des valeurs de capteurs des différents capteurs sont détectés.

2. Procédé selon la revendication 1, caractérisé en ce que le comportement de la résistance des capteurs à résistance à semi-conducteur est réglé par une couche de couverture influençant la diffusion formée d'oxyde de silicium (SiOₓ), par exemple du silicium déposé en présence de HMDS (hexaméthylène-disiloxane).

3. Procédé selon l'une des revendications 1 ou 2, caractérisé en ce que le comportement de la résistance des capteurs à résistance à semi-conducteur est réglé par une sélection de la grosseur de grains et un trempage, la grosseur de grains, pour les capteurs au SnO₂, étant inférieure à 10 µm, notamment inférieure à 5 µm, en particulier pour les mesures de l'oxyde d'azote.

4. Procédé selon la revendication 3, caractérisé en ce que, lors de la fabrication d'un capteur sensible de préférence à l'oxyde d'azote, on utilise une suspension d'oxydes d'étain (IV) purs dans de l'eau distillée au Bi dans un rapport d'environ 1:10.

5. Procédé selon la revendication 4, caractérisé en ce que la suspension d'oxyde d'étain appliquée est trempée, après un processus de séchage, dans une gamme de température comprise entre 300°C et 500°C, notamment à une température d'environ 400°C.

6. Procédé selon l'une des revendications 4 ou 5, caractérisé en ce que le capteur sensible à l'oxyde d'azote fonctionne avec une température de travail comprise entre 200°C et 300°C, de préférence une température égale à 250°C.

7. Procédé selon l'une des revendications 1 à 6, caractérisé en ce que les capteurs, tout au moins le capteur sensible à l'oxyde d'azote, fonctionnent avec des impulsions de tension de mesure, de préférence avec des impulsions rectangulaires ou trapézoïdales, avec lesquelles on analyse, notamment, les constantes de temps des états des surfaces limites induits par les gaz.

8. Procédé selon l'une des revendications 1 à 7, caractérisé en ce qu'un signal d'alarme est déclenché lorsqu'un rapport préalablement déterminé entre les valeurs des capteurs présente, pendant une durée préalablement déterminée, une tendance préalablement déterminée.

9. Procédé selon la revendication 8, caractérisé en ce que l'on adopte des valeurs critiques resp. un modèle critique, notamment dans le cas d'un rapport entre les gaz détectés, par exemple CO et H₂, qui est supérieur à environ 2,5, la tendance du rapport étant négative pendant au moins 10 minutes environ et la tendance négative apparaissant après le dépassement d'un rapport limite, de préférence égal à 2,5 environ.

10. Dispositif pour l'exécution d'un procédé de détection d'un risque d'incendie ou d'explosion resp. de feux couverts ou de foyers d'incendie dans des bâtiments ou autres, par exemple dans des installations industrielles, comprenant des capteurs à résistance à semi-conducteur (6, 7, 8, 16), des chauffages de résistance (37, 43) associés aux capteurs à résistance à semi-conducteur, grâce auxquels des températures des couches de détection définies au préalable peuvent être réglées, et une unité de calcul électronique (1) pour l'interprétation, de préférence compensante, des valeurs mesurées de la résistance en tant que mesure des concentrations gazeuses,
caractérisé
en ce qu'au moins un premier capteur comprend une couche de détection à base de SnO₂ réagissant sur la base de la résistance spécifique, et
en ce qu'au moins un second capteur comprend une couche de détection à base de SnO₂ réagissant sur la base de la résistance de contact,
et en ce que l'unité de calcul électronique est exécutée de manière à ce que les rapports et la tendance des rapports des concentrations gazeuses soient analysés.

11. Dispositif selon la revendication 10, caractérisé en ce que le capteur au SnO₂ réagissant sur la base de la résistance spécifique comprend une couche de silicium influençant la diffusion qui est produite, de préférence, par exposition du capteur dans un récipient rempli de gaz de HMDS.

12. Dispositif selon l'une des revendications 10 ou 11, caractérisé en ce que la couche de détection en SnO₂ réagissant sur la base de la résistance de contact est une couche de détection produite à partir d'une suspension de SnO₂ pur, suivie d'un trempage.

13. Dispositif selon la revendication 12, caractérisé en ce que des conducteurs électriques (24, 25) en métal, de préférence en platine, en forme de peigne, dont les dents (26) présentent entre elles une distance comprise entre 10 µm et 100 µm, notamment égale à environ 50 µm, et dont les dents (26) ont une largeur comprise entre 20 µm et 200 µm, notamment entre 60 µm et 80 µm environ, sont situés dans resp. sous la couche de SnO₂ trempée, conducteurs auxquels une tension électrique, de préférence inférieure à 10 volt, peut être appliquée.

14. Dispositif selon l'une des revendications 10 à 13, caractérisé en ce que les capteurs comprennent une couche chauffante (37, 43) en forme de méandres dont la température est réglée, de préférence, par une modulation d'impulsions en durée du courant de chauffage.

15. Dispositif selon l'une des revendications 10 à 14, caractérisé en ce que l'unité de calcul électronique (1) est exécutée de manière à procéder à des analyses décentralisées.

16. Dispositif selon l'une des revendications 10 à 15, caractérisé en ce que les capteurs dont les exécutions sont différentes ou qui fonctionnent avec des températures différentes forment des surfaces partielles d'un capteur multifonctions, par exemple un modèle "monopuce".

17. Procédé selon l'une des revendications 1 à 9, caractérisé en ce qu'il est utilisé pour la prévention et la protection contre les incendies et/ou pour la détection des feux éprouvés, notamment des feux couverts, ou des foyers d'incendie, même dans un environnement chargé en poussières, tels que les installations d'alimentation en charbon, les moulins, les installations de broyage, etc.

18. Procédé selon l'une des revendications 1 à 9 ou 17, caractérisé en ce qu'il est utilisé en combinaison avec des détecteurs d'incendie ioniques et/ou des détecteurs d'incendie optiques.

19. Dispositif selon l'une des revendications 10 à 16, caractérisé en ce qu'il est utilisé pour la prévention et la protection contre les incendies et/ou pour la détection des feux éprouvés, notamment des feux couverts, ou des foyers d'incendie, même dans un environnement chargé en poussières, tels que les installations d'alimentation en charbon, les moulins, les installations de broyage, etc.

20. Dispositif selon l'une des revendications 10 à 16 ou 19, caractérisé en ce qu'il est utilisé en combinaison avec des détecteurs d'incendie ioniques et/ou des détecteurs d'incendie optiques.
